# EUROPÄISCHE PATENTSCHRIFT

(11) **EP 0 937 618 B1**
(45) Veröffentlichungstag und Bekanntmachung des Hinweises auf die Patenterteilung: **24.05.2006**
(21) Anmeldenummer: 98118809.7
(22) Anmeldetag: 05.10.1998
(51) Int. Cl.: B60T 8/88, B60T 13/66, G05B 9/02, B60T 13/74, B60T 7/04, B60T 8/40, B60T 17/22

(54) **Verfahren und Vorrichtung zur Überprüfung einer Bremsanlage**
Method and device for monitoring a brake system
Procédé et dispositif pour contrôler la fonction d'un système de freinage

(30) Priorität: 21.02.1998 DE 19807367
(43) Veröffentlichungstag der Anmeldung: 25.08.1999
(73) Patentinhaber: ROBERT BOSCH GMBH, 70442 Stuttgart (DE)
(72) Erfinder: Schmidt, Guenther, 97941 Tauberbischofsheim (DE); Binder, Juergen, 70599 Stuttgart (DE); Winner, Hermann, 76229 Karlsruhe (DE); Gottwick, Ulrich, 70192 Stuttgart (DE)

(56) Entgegenhaltungen:
- EP-A- 0 157 309
- EP-A- 0 357 922
- WO-A-95/04674
- DE-A- 3 418 042
- DE-A- 3 630 342
- PATENT ABSTRACTS OF JAPAN vol. 017, no. 012 (M-1351), 11. Januar 1993 (1993-01-11) & JP 04 243655 A (TOYOTA MOTOR CORP), 31. August 1992 (1992-08-31)
- JONNER W-D ET AL: "ELECTROHYDRAULIC BRAKE SYSTEM - THE FIRS APPROACH TO BRAKE-BY-WIRE TECHNOLOGY" CURRENT AND FUTURE DEVELOPMENTS IN ABS/TCS AND BRAKE TECHNOLOGY, XX, XX, 1. Februar 1996 (1996-02-01), Seiten 105-112, XP000199045

## Beschreibung

### Stand der Technik

Die Erfindung betrifft ein Verfahren und eine Vorrichtung zur Überprüfung einer Bremsanlage gemäß dem Oberbegriff der unabhängigen Patentansprüche.

Aus dem SAE-Paper 960991 ist eine elektrohydraulische Bremsanlage bekannt, bei welcher aus der Bremspedalbetätigung durch den Fahrer ein Bremswunsch des Fahrers abgeleitet wird. Dieser Bremswunsch wird unter Berücksichtigung von weiteren Betriebsgrößen in Sollbremsdrücke für die einzelnen Radbremsen umgerechnet. Die Sollbremsdrücke werden für jedes Rad durch Druckregelkreise auf der Basis des vorgegebenen Solldrucks sowie des im Bereich der Radbremse gemessenen Ist-Bremsdruckes eingeregelt. Bei derartigen Bremssystemen wird die Bremskraft an den Rädern auf der Basis elektrisch ansteuerbarer Ventilanordnungen abhängig vom Bremswunsch eingestellt. Besondere Aufmerksamkeit ist dabei der Betriebssicherheit und Verfügbarkeit des Systems zu geben. Daher wird im genannten Stand der Technik während der Initialisierung des Bremssystems ein sogenannter predrive-check durchgeführt, während dessen Bremsdruck in den Radbremsen aufgebaut und mit Sensorinformationen verglichen wird. Eine besondere Ausgestaltung dieses predrive-checks wird nicht beschrieben.

Es ist Aufgabe der Erfindung, Maßnahmen zur Überprüfung einer Bremsanlage im Rahmen eines predrive-checks anzugeben, mit der alle wesentlichen Komponenten der Bremsanlage auf korrekte Funktionsweise getestet werden können.

Dies wird durch die kennzeichnenden Merkmale der unabhängigen Patentansprüche erreicht.

### Vorteile der Erfindung

Die Erfindung stellt einen predrive-check für ein elektronisch steuerbares Bremssystem bereit, bei welchem alle wesentlichen Komponenten der Bremsanlage getestet werden können. Besonders vorteilhaft ist, daß während der Initialisierung des Bremssystems die Radzangen nach einem fest vorgegebenen Muster kurz mit Druck beaufschlagt werden und zu bestimmten Zeitpunkten Druckgrenzwerte abgefragt werden. Fällt der auf diese Weise ermittelte Druckverlauf charakteristisch aus dem Rahmen, d.h. werden Druckgrenzwerte über- oder unterschritten, wird daraus auf Fehler geschlossen und das Bremssystem ganz oder teilweise abgeschaltet. Dadurch wird sowohl die Betriebssicherheit als auch die Verfügbarkeit des Bremssystems deutlich verbessert.

Besonders vorteilhaft ist, daß sowohl die Fähigkeit des Systems zur Druckregelung auf unterschiedliche Druckniveaus in den Radbremsen einer Achse als auch der Aufbau auf Speicherdruckniveau getestet wird. Auf diese Weise werden alle wesentlichen Funktionen der Bremsanlage auf Korrektheit überprüft.

Weitere Vorteile ergeben sich aus der nachfolgenden Beschreibung von Ausführungsbeispielen bzw. aus den abhängigen Patentansprüchen.

### Zeichnung

Die Erfindung wird nachstehend an Hand der in der Zeichnung dargestellten Ausführungsformen näher erläutert. Dabei zeigt Figur 1 ein bevorzugtes Ausführungsbeispiel einer elektro-hydraulischen Bremsanlage, während in Figur 2 die elektro-hydraulische Bremsanlage steuernde Steuereinheit dargestellt ist. In Figur 3 sind (nicht maßstabsgetreue) Zeitdiagramme aufgeführt, die den erwarteten Verlauf der Drücke in den 4 Radbremsen bei Durchführen des predrive-Tests und fehlerfreiem Betrieb der Bremsanlage darstellen. Figur 4 zeigt ein Flußdiagramm, welches die Durchführung des predrive-Tests in einem bevorzugten Ausführungsbeispiel beschreibt.

### Beschreibung von Ausführungsbeispielen

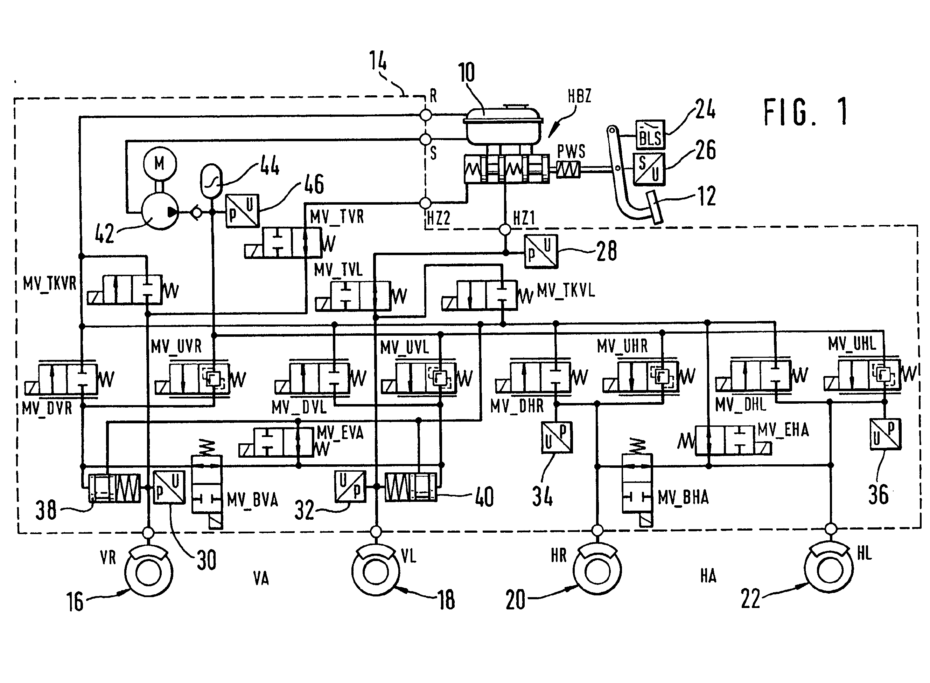

Figur 1 zeigt ein bevorzugtes Ausführungsbeispiel einer elektrohydraulischen Bremsanlage. Sie zeigt einen Hauptbremszylinder HBZ mit Vorratsbehälter 10, an den ein vom Fahrer betätigbares Bremspedal angebracht ist. Ferner ist ein Hydraulikaggregat 14 vorgesehen, welches Ventil und Pumpenanordnungen zur Steuerung der Radbremsen 16, 18, 20 und 22 enthält. Mit dem Bremspedal 12 ist ein Bremspedalschalter 24 verbunden, welcher bei Betätigen des Bremspedals schließt, und eine Meßeinrichtung 26 zur Erfassung der Auslenkung des Bremspedals. Der Bremspedalschalter kann als einfacher Schließer ausgelegt sein oder zur Verbesserung der Überwachbarkeit als doppelter Schalter mit einem Öffner und einem Schließer. Ferner ist ein Pedalwegsimulator PWS vorgesehen, welcher für den Fahrer bei Betätigen des Bremspedals ein gewohntes Pedalgefühl bezüglich Gegenkraft und Pedalauslenkung simuliert. An den Hauptbremszylinder HBZ sind die zwei Bremskreise HZ1 und HZ2 angeschlossen. In diesen sind jeweils ein Trennventil MV_TVR und MV_TVL eingefügt, welches bei elektrisch gesteuerter Bremsanlage durch Bestromung geschlossen wird. Vor dem Trennventil mißt in zumindest einem der Bremskreise ein Drucksensor 28 den vom Fahrer über die Bremspedalbetätigung aufgebrachten Druck. Bei geschlossenen Trennventilen ist der Hauptbremszylinder hydraulisch vom Druckregelsystem abgetrennt. Im Druckregelsystem sind für jede Radbremse ein Druckmodulator für die Bremsdruckregelung enthalten. Ein Druckmodulator besteht dabei aus je einem Einlaßventil (MV_UVR, MV_UVL, MV_UHR, MV_UHL), je einem Auslaßventil (MV_DVR, MV_DVL, MV_DHR, MV_DHL) und je einem Drucksensor 30, 32, 34 und 36, der den Druck in der zur Radbremse führenden Leitung mißt. In den beiden Vorderraddruckmodulatoren befindet sich je ein Medientrennerkolben 38 und 40 zwischen den Ventilen (Ein- und Auslaßventil) und den Drucksensoren bzw. der Radbremse. Die Druckmodulatoren sind über Balanceventile MV_BVA und MV_BHA verbunden, die bei Bestromung voneinander unabhängig gesteuert werden können. Ferner sind Entlastungsventile MV_EVA bzw. MV_EHA für jede Achse vorgesehen, die in unbestromtem Zustand den Druckabbau aus den Raddruckmodulatoren einer Achse erlauben. Sie verbinden die Druckmodulatoren einer Achse mit den zum Vorratsbehälter 10 führenden Rückführleitungen. Im elektrisch gesteuerten Betriebszustand sind diese beiden Ventile permanent bestromt, d.h. geschlossen. Ferner ist jeweils ein Temperaturkompensationsventil MV_TKVL und MV_TKVR für jeden Vorderraddruckmodulator vorgesehen. Diese Ventile sind unbestromt geschlossen und werden zum Druckabbau aus dem Druckmodulator eines Vorderrades durch Bestromung geöffnet, wenn bestimmte Bedingungen, insbesondere eine sehr lange Bremsdauer, vorliegen. Die Temperaturkompensationsventile verbinden die Bremsleitung zur Radbremse mit der Rücklaufleitung. Die Energie für die Bremsdruckmodulation kommt aus einer von einem Elektromotor angetriebenen Einkolben-Hochdruckpumpe 42. Diese ist an einen Hochdruckspeicher 44 angeschlossen, der als Zwischenpuffer dient und dessen Druck durch einen Drucksensor 46 erfaßt wird. Die Druckleitung der Pumpe 42 führt zu den Einlaßventilen der Radbremsen, während die Saugleitung der Pumpe 42 mit dem Vorratsbehälter 10 verbunden ist. Bezüglich Einzelheiten der hydraulischen Schaltung wird auf das in Figur 1 dargestellte bevorzugte Ausführungsbeispiel verwiesen. Die nachfolgend beschriebene erfindungsgemäße Vorgehensweise wird jedoch nicht nur in Verbindung mit einer solchen Hydraulikschaltung vorteilhaft angewendet, sondern überall dort, wo im Zusammenhang mit elektrisch gesteuerten Bremsanlage mit elektrisch steuerbarer Druckversorgung der Druck in einem Speicherelement erfaßt und zur Steuerung der Bremsanlage herangezogen wird.

Die Temperaturkompensationsventile und die Entlastungsventile entfallen in einem Ausführungsbeispiel.

Im Normalbetrieb arbeitet die in Figur 1 beschriebene Bremsanlage wie folgt. Der Fahrer tritt auf das Bremspedal. Er spürt dabei eine wegabhängige Gegenkraft. Diese Wegabhängigkeit wird durch die definierte Charakteristik des Pedalwegsimulators gebildet. Bei Sensierung eines Bremswunsches über den Pedalwegsensor, den Bremspedalschalter und/oder den Drucksensor werden die Trennventile (MV_TVR und MV_TVL) und die Entlastungsventile (MV_EVA und MV_EHA) geschlossen. Im Hauptbremszylinder HBZ baut sich ein Druck auf, der aus der Pedalkraft resultiert. Aus den Signalen des Bremslichtschalters 24, des Wegsensors 26 und/oder des Drucksensors 28 wird der Bremswunsch des Fahrers beispielsweise als Sollverzögerung oder als Sollbremskraft errechnet. Aus diesem Bremswunsch werden die einzelnen Sollradbremsdrücke gebildet. Je nach Fahrzustand und Schlupfbedingung werden diese Drücke modifiziert und über die Raddruckmodulatoren durch Ventilbestromungen eingeregelt. Im geschlossenen Regelkreis werden bei jeder Radbremse die aktuellen Drücke an den Raddrucksensoren für den Soll-Ist-Abgleich herangezogen. Bei unterschiedlichen Solldrücken im linken und rechten Rad einer Achse werden die Ausgleichsventile geschlossen und in jeder Radbremse der vorgegebene Solldruck durch Ansteuern der Einlaß- und Auslaßventile im Sinne einer Regelung des Ist-Bremsdruckes auf den Sollbremsdruck eingeregelt. Zum Druckaufbau an einer Radbremse wird das Einlaßventil so weit bestromt, daß sich der gewünschte Solldruck in der Radbremse mit der gewünschten Dynamik ausbildet. Eine Druckabnahme wird entsprechend durch Bestromung des Auslaßventils erreicht, wobei Bremsflüssigkeit in den Vorratsbehälter über die Rücklaufleitung zurückfließt. Die Entlastungsventile kommen im Fehlerfall des Systems zur Wirkung. Wenn während einer Bremsung das elektrische System ausfällt, fallen alle Ventile in ihren unbestromten Zustand zurück. Die Entlastungsventile öffnen dann die Druckmodulatoren zur Rücklaufleitung, so daß kein Bremsdruck eingesperrt werden kann. Ebenso gestatten diese Ventile im Ruhezustand den Volumenausgleich zum Behälter bei Temperaturschwankungen.

Eine Betätigung der Pumpe 42 findet bei aktivem Bremsvorgang und/oder bei einem Absinken des Speicherdrucks im Speicher 44 unter einen vorbestimmten Wert statt. Neben dieser Funktion wird der erfaßte Speicherdruck 46 auch im Rahmen der Regelung ausgewertet, da er im wesentlichen den am Eingang der Einlaßventile liegenden Druck repräsentiert.

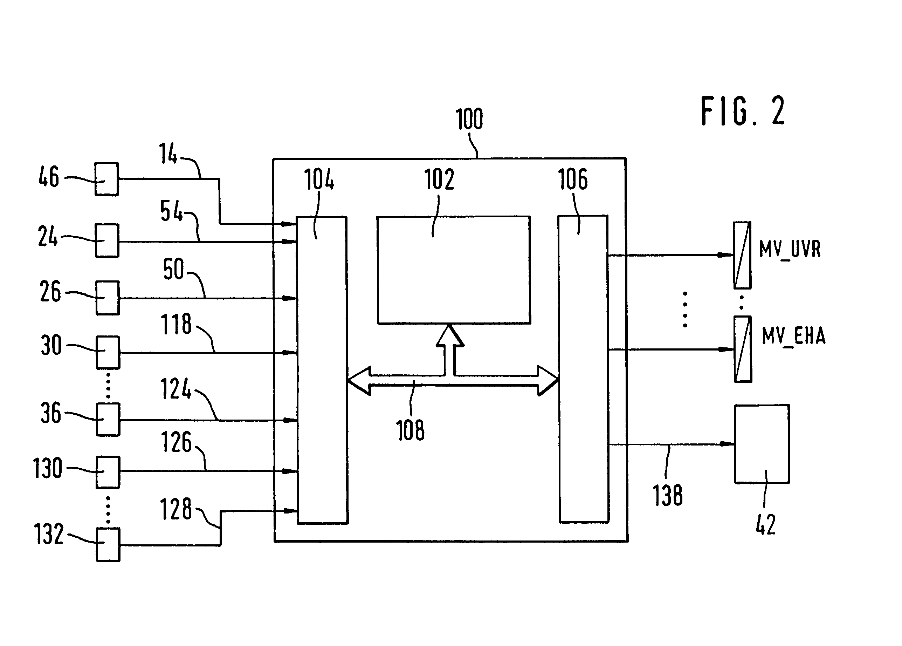

Die elektrisch betätigbaren Ventile sowie die Pumpe 42 werden von wenigstens einer elektronischen Steuereinheit angesteuert, die in Figur 2 skizziert ist. Sie umfaßt dabei wenigstens einen Mikrocomputer 102, eine Eingangsschaltung 104, eine Ausgangsschaltung 106 und ein diese Elemente verbindendes Bussystem 108 zum gegenseitigen Datenaustausch.

Der Eingangsschaltung 104 sind die Leitungen 50 und 54 von Bremspedalschalter 24 und Pedalwegsensor 26 zugeführt. Ferner verbinden Eingangsleitungen 118 bis 124 die Eingangsschaltung 104 mit den jeder Radbremse zugeordneten Drucksensoren 30 bis 36. Ferner ist eine Eingangsleitung 140 vorgesehen, die von der Meßeinrichtung 46 zur Erfassung des Speicherdrucks der Eingangsleitung 104 zugeführt ist. Weitere Eingangsleitungen 126 bis 128 verbinden die Eingangsschaltung 104 mit Meßeinrichtungen 130 bis 132 zur Erfassung weiterer Betriebsgrößen der Bremsanlage, des Fahrzeugs und/oder dessen Antriebseinheit. Derartige Betriebsgrößen sind beispielsweise die Radgeschwindigkeiten, gegebenenfalls das von der Antriebseinheit abgegebene Motormoment, Achslasten, der Druck in der Bremsleitung (Sensor 28), etc. An die Ausgangsschaltung 106 sind mehrere Ausgangsleitungen angeschlossen. Beispielhaft sind die Ausgangsleitungen dargestellt, über welche die Ventile der Druckmodulatoren betätigt werden. Über eine weitere Ausgangsleitung 138 wird die Pumpe 42 angesteuert. Die Steuereinheit 100 steuert die Bremsanlage abhängig von den zugeführten Signalgrößen im oben dargestellten Sinne.

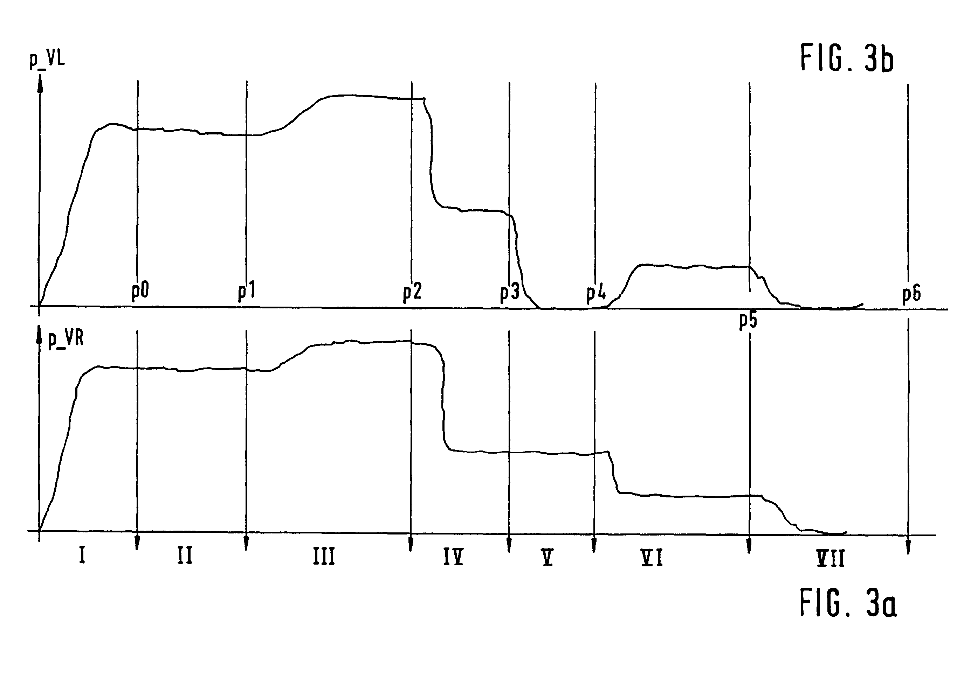

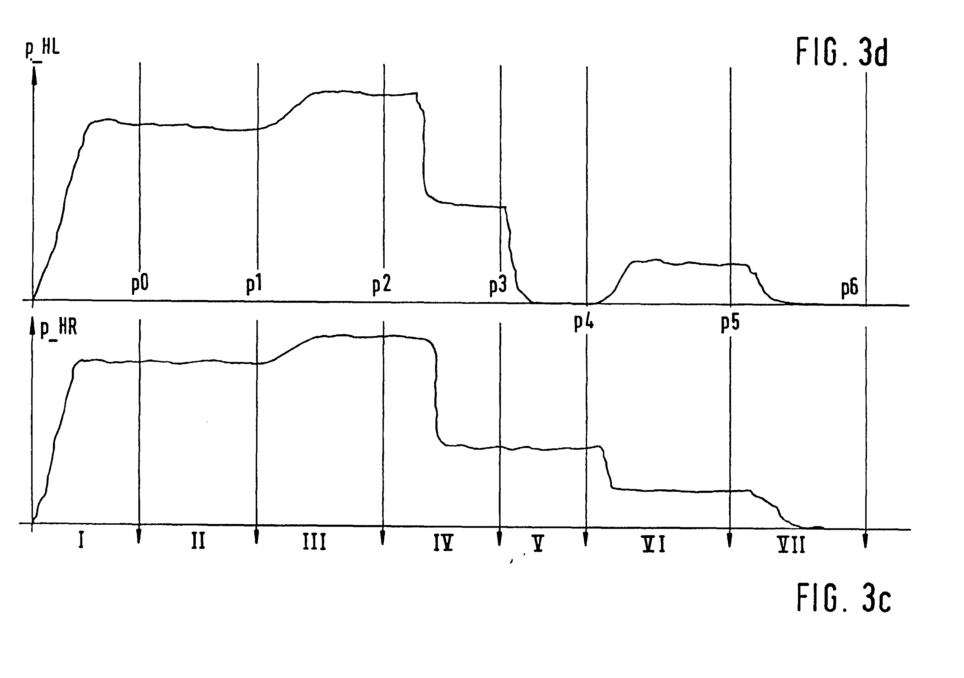

In Figur 3 ist ein beim Selbsttest im Normalfall in etwa erreichter Druckverlauf in einem Ausführungsbeispiel dargestellt. Figur 3a zeigt den Druckverlauf für das rechte Vorderrad, Figur 3b den für das linke Vorderrad, Figur 3c den für das rechte Hinterrad und Figur 3d den für das linke Hinterrad.

Mit Bestromen des Systems wird in einer ersten Phase I durch Öffnen der Einlaßventile MV_Uxx bei geschlossenen Abbauventilen MV_Dxx und Trennventilen MV_Txx und Balanceventilen MV_Bxx der Druck in den Radbremsen auf Speicherdruckniveau geregelt aufgebaut, d.h. über den Druckregler abhängig von der Abweichung zwischen Soll- und Istdruck im Rahmen einer Rampe erhöht. Nach Ablauf einer vorgegebenen Zeit, innerhalb derer das Speicherdruckniveau an den Radbremsen bei funktionsbereitem System erreicht ist, wird überprüft, ob an jeder Radbremse das zu erwartende Druckniveau P0 erreicht ist. Ist dies der Fall, werden in einer zweiten Phase II die Balanceventile MV_Bxx geöffnet. Zum nächsten Zeitpunkt wird überprüft, ob das zu erwartende Druckniveau P1 in etwa an den Radbremsen vorhanden ist. Ist dies der Fall, findet ein Abgleich der Drucksensoren der Radbremsen und des Speicherdrucksensors statt, indem beispielsweise für jeden Drucksensor ein Verstärkungswert abgelegt wird, der der Abweichung von einem vorgegebenen Normwert entspricht. Ein Offsetwert der Drucksensoren wird im drucklosem Zustand ermittelt. Nach korrekter Abarbeitung der Phase II wird im Rahmen der Phase III die Speicherdruckpumpe 42 eingeschaltet. Dies führt im fehlerfreiem Betrieb zu einem Druckanstieg in den Radbremsen, wie er in den Figur 3a bis 3d dargestellt ist. Waren z.B. durch schlechte Entlüftung der Bremsanlage die Medientrenner 38 und 40 am Anschlag, so wird dies am fehlenden Druckaufbau an den Vorderrädern erkannt und der Drucksensorabgleich nicht durchgeführt. Nach Ablauf einer bestimmten Zeit wird überprüft, ob an den Radbremsen das zu erwartende Druckniveau P2 erreicht ist. Ist dies der Fall, wird in einer Phase IV Druck abgebaut, indem die jeweiligen, den Radbremsen zugeordneten Abbauventile MV_Dxx für eine bestimmte Zeit geregelt geöffnet werden. Dies soll im fehlerfreien Betrieb zu einem Druckabbau auf ein bestimmtes Druckniveau, beispielsweise 100 bar, führen. Das Druckniveau wird nach Ablauf der Phase IV an Hand des vorgegebenen Druckniveauwerts P3 überprüft. Ist auch diese Überprüfung fehlerfrei durchlaufen, wird durch Öffnen des entsprechenden Entlastungsventils (sofern vorhanden) am linken Vorderrad und am linken Hinterrad bei geschlossenem Auslaßventil am rechten Vorderrad und am rechten Hinterrad (MV_DVL, MV_DHL) der Druck in der linken Vorderradbremse und der linken Hinterradbremse auf 0 abgebaut, während der in der rechten Vorderradbremse und in der rechten Hinterradbremse der Druck auf einen bestimmten Niveau (P3) gehalten wird. Dazu sind die Balanceventile MV_Bxx zu schließen. Die Phase V wird nach einer bestimmten Zeit beendet, wobei überprüft wird, ob die vorgegebenen Druckniveaus P4 erreicht wurden. Ist auch dies der Fall, wird in der Phase VI durch Öffnen der Balanceventile MV_Bxx ein Druckausgleich an den Achsen herbeigeführt. Nach einer bestimmten Zeit wird überprüft, ob das zu erwartende Druckniveau P5, in einem bevorzugten Ausführungsbeispiel 25 bar, erreicht wurde. Ist dies der Fall, werden in Phase VII die Trennventile bzw. an den Hinterachsbremsen die Druckabbauventile, geöffnet und zum Abschluß des Selbsttests der Druck in allen Radbremsen der Druck auf 0 abgebaut. Am Ende der Phase VII wird das vorgegebene Druckniveau P6 (0 bar) verglichen, und der Normalbetrieb der Bremsanlage im Rahmen der elektrohydraulischen Regelung freigegeben, wenn an allen Rädern der Raddruck vollständig abgebaut wurde.

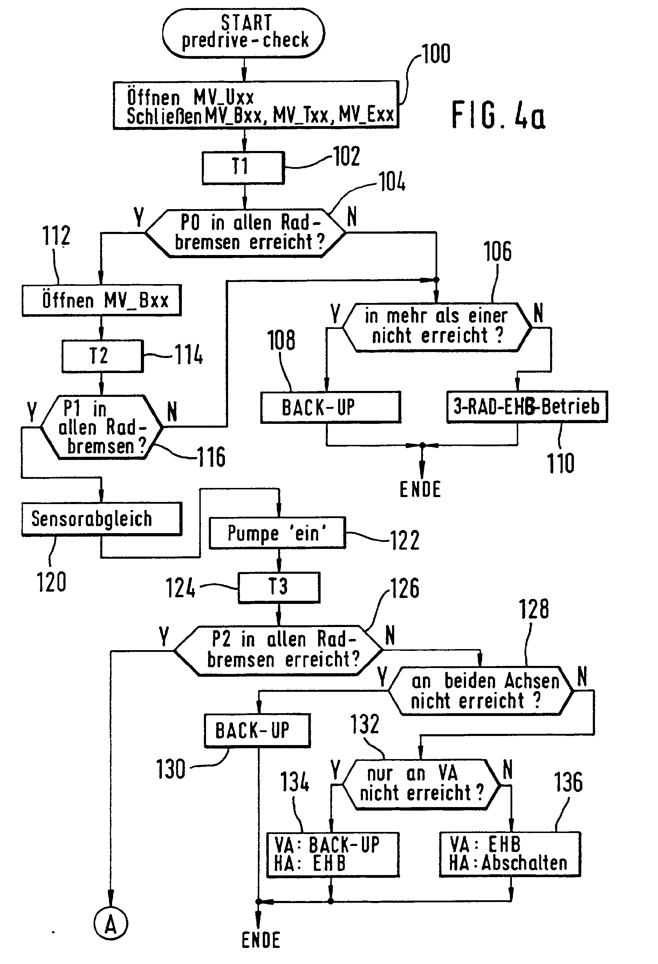

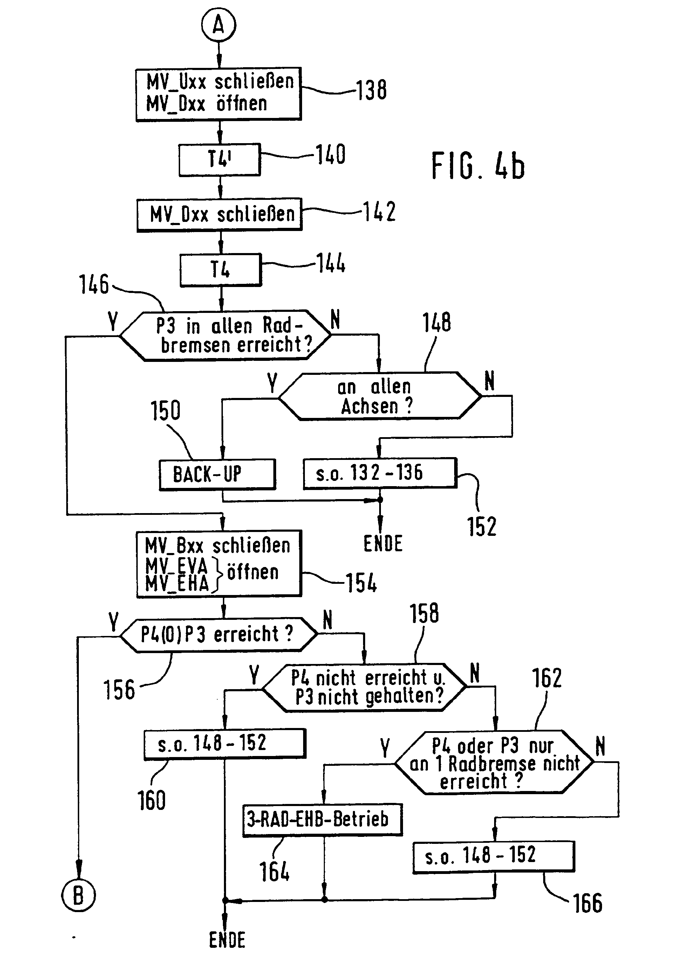

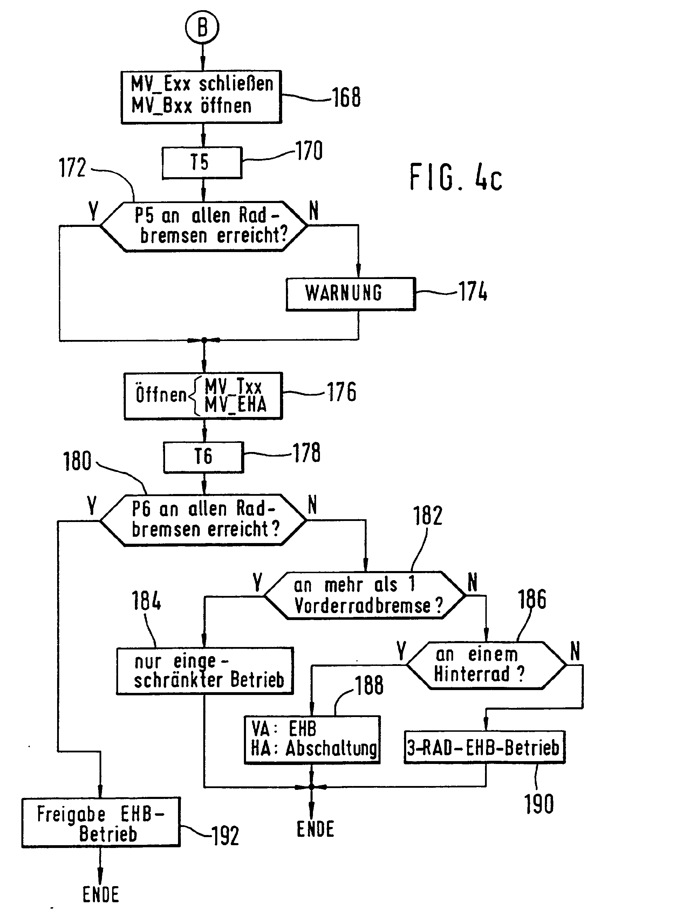

Wird in einer der beschriebenen Phasen an wenigstens einem Rad erkannt, daß das zu erwartende Druckniveau um einen bestimmten Betrag über- oder unterschritten wurde, wird, soweit möglich, der Fehler isoliert und ein Notbremsbetrieb eingeleitet, der Fahrer durch Ansteuerung einer Warnlampe gewarnt und der Betrieb der Bremsanlage mit einer sich im Notlauf befindenden Bremsanlage gestartet. Ein bevorzugtes Ausführungsbeispiel, welches die Zuordnung der Notbremsbetriebe zu den einzelnen Fehlererkennungen zeigt, ist an Hand des Flußdiagramms der Figur 4 dargestellt. Dieses skizziert ein Programm des Mikrocomputers 102, welches bei Bestromen des Systems durchgeführt wird, wenn der Fahrer das Bremspedal nicht betätigt. Zur Sicherstellung der Betriebssicherheit sind während des Betriebs weitere Überprüfungen vorgesehen, welche die korrekte Funktion der elektrohydraulischen Bremsanlage sicherstellen.

Nach Start des Programms werden im ersten Schritt 100 die Regelventile MV_Uxx geöffnet, die Balance- MV_Bxx sowie die Trennventile MV_TXX und die Entlastungsventile MV_EXX geschlossen. Dadurch wird der Radbremsdruck auf den Speicherdruck geführt. Nach Ablauf einer bestimmten Zeit T1 (Schritt 102) wird im Schritt 104 überprüft, ob der zu erwartende Druckwert P0 in etwa in allen Radbremsen erreicht wurde. Ist dies nicht der Fall, muß ein Fehlerzustand vorliegen. Um diesen zu isolieren wird im Schritt 106 überprüft, ob der Druckwert P0 in mehr als einer Radbremse nicht erreicht wurde. Ist dies der Fall, liegt ein Fehler in der Druckversorgung (42, 44, 46 und zugehörigen Schaltungen) nahe, so daß gemäß Schritt 108 in einen vollständigen Notbremsbetrieb (hydraulischer back-up) übergegangen werden muß, in dem alle Ventile stromlos geschaltet werden. Der Fahrer steuert dann über die Betätigung des Bremspedals 12 hydraulisch Bremsdruck in die Radbremsen der Vorderachse ein.

Ist das Druckniveau nur an einer Radbremse nicht erreicht, wird gemäß Schritt 110 als Notbremsbetrieb ein sogenannter 3-Rad-EHB-Betrieb eingeleitet. Während dieses Betriebs ist das Balanceventil der Achse, an der der Fehler erkannt wurde geschlossen. Es wird also nur ein Rad dieser Achse gebremst. Das andere Rad wird nicht gebremst. Das möglicherweise auftretende Giermoment wird durch eine aus dem Stand der Technik bekannte Giermomentenaufbauverzögerung reduziert. Alle radindividuellen Funktionen wie Antiblockierschutz, Antriebsschlupfregelung, Fahrdynamikregelung, etc. sowie Funktionen wie eine elektronische Bremskraftverteilung, etc. werden angepaßt, notfalls abgeschaltet. Während des Betriebs der Bremsanlage im 3-Rad-EHB-Betrieb werden weiter Funktionsüberwachungen durchgeführt, die die korrekte Funktion des reduzierten elektronischen Betriebs sicherstellen.

Hat Schritt 104 ergeben, daß der zu erwartende Druckwert in allen Radbremsen erreicht wurde, werden im Schritt 112 die Balanceventile MV_Bxx geöffnet. Nach Ablauf der für diese Phase vorgesehenen Zeit T2 (Schritt 114) wird im Schritt 116 überprüft, ob der zu erwartende Druck P1 in allen Radbremsen vorhanden ist. Ist dies nicht der Fall, wird mit den Schritten 106 bis 110 fortgefahren.

Hat die Überprüfung in Schritt 116 ergeben, daß die Bremsanlage ordnungsgemäß arbeitet, wird gemäß Schritt 120 der Drucksensorabgleich durchgeführt und im folgenden Schritt 122 die Speicherdruckpumpe für eine Zeitspanne kleiner als T3 eingeschaltet. Dadurch wird der Druck an den Radbremsen weiter erhöht. Nach Ablauf einer bestimmten Zeit T3 gemäß Schritt 124 wird dann am Ende dieser Phase III im Schritt 126 überprüft, ob der jeweils zu erwartende Druck P2 an allen Radbremsen erreicht ist. Ist dies nicht der Fall, wird gemäß Schritt 128 überprüft, ob er an beiden Achsen nicht erreicht ist. In diesem Fall muß von einem schwerwiegendem Fehler ausgegangen werden, beispielsweise einem Fehler der Speicherdruckpumpe 42, eine Leckage im Bereich der Druckversorgung oder erheblichem Gasanteil in der Hydraulikflüssigkeit, so daß gemäß Schritt 130 ein vollständiger Back-up eingeleitet wird. Ist der Druckwert nur an einer Achse nicht erreicht, so wird gemäß Schritt 132 überprüft, ob dies die Vorderachse ist. In diesem Fall liegt beispielsweise ein Fehler im Bereich der Medientrenner, eine Leckage im Bereich der Vorderachsdruckmodulation, etc. vor, so daß an der Vorderachse der hydraulische Back-up eingeschaltet wird, während die korrekt funktionierende Hinterachse in der elektronischen Regelung verbleibt. Wurde an der Hinterradbremsen der zu erwartende Druck nicht erreicht, so wird die korrekt arbeitende Vorderachsbremse im elektronisch geregelten Betrieb gebremst, während die Hinterachsbremsen abgeschaltet werden (stromlose Einlaßventile). Während dieses Notbremsbetriebs wird der jeweils elektronisch geregelte Teil der Bremsanlage weiterhin auf Fehler überwacht.

Hat Schritt 126 ergeben, daß der zu erwartende Druck an allen Radbremsen erreicht wurden, werden gemäß Schritt 138 die Einlaßventile MV_Uxx geschlossen und die Auslaßventile MV_Dxx geregelt geöffnet. Nach Ablauf einer bestimmten Zeit T4' (Schritt 140), während der die Auslaßventile bestromt werden, werden im Schritt 142 die Auslaßventile MV_Dxx wieder geschlossen. Dadurch wird ein bestimmter, vorgegebener Druck abgebaut. Statt einem vollständigem Öffnen der Auslaßventile wird in anderen Ausführungsbeispielen mit dem Druckregler der Druck abgebaut. Dies verbessert die Geräuschentwicklung. Nach Ablauf der für die Phase IV vorgesehenen Zeit T4 (Schritt 144) wird im Schritt 146 überprüft, ob der nach Ablauf dieser Phase zu erwartende Druck P3 an allen Radbremsen erreicht wurde. Ist dies nicht der Fall, wird im Schritt 148 überprüft, ob dies an allen Achsen der Fall ist. In diesem Fall ist beispielsweise von einer Verstopfung in der Rücklaufleitung auszugehen, so daß ein vollständiger hydraulischer Back-up gemäß Schritt 150 eingeleitet wird. Ist nur eine Achse betroffen, so wird von einem Defekt eines der Auslaßventile auszugehen sein, so daß ein den Schritten 132 - 136 entsprechender Notbremsbetrieb eingeleitet wird.

Hat Schritt 146 ergeben, daß der Druck an allen Radbremsen erreicht wurde, werden mit Einleiten der Phase V im Schritt 154 die Balanceventile MV_Bxx geschlossen und an Vorder- und Hinterachse jeweils ein Entlastungsventil geöffnet. Danach wird im Schritt 146 überprüft, ob der jeweils zu erwartende Raddruck erreicht ist. Dies ist für die Radbremsen, bei denen das Entlastungsventil geöffnet ist, der Wert 0 (P4), an den anderen der bisherige Wert (P3). Wird der Druckwert an einem Rad nicht erreicht, wird im Schritt 158 überprüft, ob sowohl P4 als auch P3 nicht erreicht wurden. Ist dies der Fall, so liegt z.B. ein Fehler im betreffenden Auslaßventil und eine Leckage im Bereich der Radbremse vor. In diesem Fall wird gemäß Schritt 160 analog zur Vorgehensweise der Schritte 148 - 152 vorgegangen. Ist nur an einer Radbremse entweder P4 oder P3 nicht erreicht (Schritt 162), so wird diese Radbremse gemäß Schritt 164 im 3-Rad-EHB-Betrieb isoliert. Ist P3 oder P4 an zwei oder mehr Radbremsen nicht erreicht worden, so wird gemäß Schritt 166 entsprechend dem Schritten 148 - 152 vorgegangen.

Wurde gemäß Schritt 156 auch die Phase V ordnungsgemäß abgeschlossen, werden im Schritt 168 die geöffneten Entlastungsventile geschlossen und die Balanceventile MV_Bxx geöffnet. Nach Ablauf der für die Phase V vorgesehene Zeit T5 (Schritt 170) werden im Schritt 172 die Radbremsdrücke auf Erreichen des zu erwartenden Drucks P5 überprüft. Wird dieser Druck nicht erreicht, findet zwischen den Radbremsen einer Achse kein ordnungsgemäßer Druckausgleich statt, d.h. das entsprechende Balanceventil öffnet nicht richtig. Dies ist keine wesentliche Einschränkung des Betriebes, so daß gemäß Schritt 174 der Fahrer lediglich durch eine Warnlampe gewarnt wird.

Nach Schritt 174 bzw. im Falle einer Ja-Antwort im Schritt 172 werden gemäß Schritt 176 die Trennventile MV_Txx und die Druckabbauventile an der Hinterachse geöffnet. Nach Ablauf der Zeit T6 gemäß Schritt 178 für die letzte Testphase werden im Schritt 180 die Radbremsdrücke auf den Wert P6, nämlich 0, überprüft. Wird an wenigstens einer Radbremse dieser Druck nicht erreicht, wird im Schritt 182 überprüft, ob dies an mehr als einer Vorderradbremse der Fall ist. Ist dies der Fall, wird von einem fehlerhaften Schließen beider Trennventile auszugehen sein, so daß gemäß 184 nur ein eingeschränkter Betrieb des Fahrzeugs beispielsweise im Rahmen einer Leistungsbegrenzung möglich ist. Ist nur eine Vorderradbremse betroffen, wird im Schritt 186 überprüft, ob eine Hinterachsbremse betroffen ist. Ist dies nicht der Fall, wird die diesem Trennventil zugeordnete Vorderradbremse isoliert und gemäß Schritt 190 ein 3-Rad-EHB-Betrieb durchgeführt. Ist eine Hinterachsbremse betroffen, wird gemäß Schritt 188 die Hinterachse abgeschaltet. Ist gemäß Schritt 180 auch die letzte Phase des Tests erfolgreich abgeschlossen worden, wird gemäß Schritt 192 der EHB-Betrieb freigegeben.

Gibt der Fahrer während des Test einen Fahrwunsch vor oder betätigt er das Bremspedal, wird der Test sofort abgebrochen und die Funktionssicherheit durch Überprüfungen sichergestellt, die während des laufenden Betriebs durchgeführt werden. Durch geeignete Modifikation (z.B. durch Nichtöffnen der Trennventile) kann der Test auch mit getretenem Bremspedal durchgeführt werden.

Wird im Rahmen des predrive-check ein Fehler erkannt und ein Notbremsbetrieb eingeleitet, so wird dieser wenigstens für den folgenden Betriebszyklus aufrechterhalten. Vor Beginn des nächsten Betriebszyklus wird der Test erneut durchgeführt und in einem Ausführungsbeispiel bei fehlerfreier Bremsanlage der Normalbetrieb wieder aufgenommen.

Die Durchführung des Test erfolgt vorzugsweise geräusch- und zeitoptimiert, so daß für einen Fahrer der größtmögliche Komfort und der schnellst mögliche Verfügbarkeit der Bremse erreicht wird. Zu diesem Zweick wird für den Druckaufbau und den Druckabbau der Druckregler eingesetzt, dessen Sollwert rampenförmig in diesem Sinne verändert wird bis Erreichen des zum test vorgesehenen Druckwerts.

## Patentansprüche

1. Verfahren zur Überprüfung einer Bremsanlage, bei welcher jeder Radbremse (16, 18, 20, 22) elektrisch betätigbare Ventilanordnungen (MV_UVR, MV_UVL, MV_UHR, MV_UHL, MV_DVR, MV_DVL, MV_DHR, MV_DHL) zugeordnet sind, über die abhängig von einer Bremswunschvorgabe Druck auf-, abgebaut oder konstant gehalten wird, wobei die Bremswunschvorgabe elektrisch erfaßt und in Ansteuersignale für die Ventilanordnungen umgesetzt wird, wobei vor Fahrtbeginn ein Selbsttest der Bremsanlage durchgeführt wird, in deren Verlauf die Funktionsweise der Ventilanordnungen sowie einer in der Bremsanlage vorhandenen Druckversorgung (42) überprüft wird, wobei bei einem erkannten Fehler ein Notbremsbetrieb eingeleitet wird, **dadurch gekennzeichnet, daß** im Rahmen des Selbsttests mehrere aufeinander folgende Testphasen vorgesehen sind, denen bestimmte Betätigungen der Ventilanordnungen und der Druckversorgung zugeordnet sind, an deren Ende jeweils zu erwartende Radbremsdruckwerte mit den erreichten Werten verglichen wird und bei Erkennen von Abweichungen an wenigstens einer Radbremse in Abhängigkeit von der erkannten Abweichung ein Notbremsbetrieb eingeleitet wird.

2. Verfahren nach Anspruch 1, **dadurch gekennzeichnet, daß** der Notbremsbetrieb zumindest für den nächsten Betriebszyklus beibehalten wird.

3. Verfahren nach einem der vorhergehenden Ansprüche, **dadurch gekennzeichnet, daß** in einer Testphase durch Öffnen der Druckeinlaßventile (MV_UVR, MV_UVL, MV_UHR, MV_UHL) zu jeder Radbremse (16, 18, 20, 22) der Radbremsdruck auf Speicherdruckniveau aufgebaut wird.

4. Verfahren nach Anspruch 3, **dadurch gekennzeichnet, daß** wenn nur in einer Radbremse der Speicherdruck nicht erreicht wird, ein Notbremsbetrieb unter elektronischer Regelung dreier Radbremsen und Abschalten einer Radbremse eingeleitet wird, während bei Nichterreichen des Speicherdruckniveaus mehr als eine Radbremse ein vollständiger hydraulischer Back-up eingeleitet wird.

5. Verfahren nach einem der vorhergehenden Ansprüche, **dadurch gekennzeichnet, daß** in einer Testphase ein den Druckausgleich zwischen den Radbremsen einer Achse herstellendes Ventil (MV_BVA, MV_BHA) geöffnet wird.

6. Verfahren nach Anspruch 5, **dadurch gekennzeichnet, daß**, wenn der erwartete Druckausgleich nicht stattfindet, entweder vollständig auf einen hydraulischer Back-up, einen Back-up nur an der Vorderachse oder ein Abschalten der Hinterachsbremsen erfolgt, während bei korrekter Funktionsweise die Drucksensoren (30, 32, 34, 36) an den Radbremsen abgeglichen werden.

7. Verfahren nach einem der vorhergehenden Ansprüche, **dadurch gekennzeichnet, daß** in einer Testphase die Speicherdruckpumpe (42) der Druckversorgung eingeschaltet wird, um die Ladefunktion des Speichers (44) der Druckversorgung zu überprüfen.

8. Verfahren nach Anspruch 7, **dadurch gekennzeichnet, daß**, wenn der zu erwartende Druck an beiden Achsen nicht erreicht wird, ein vollständiger Back-up eingeleitet wird, wenn er nur an der Vorderachse nicht erreicht, nur die Vorderachse hydraulisch gesteuert wird, wenn er nur an der Hinterachse nicht erreicht wird, die Hinterachsradbremsen abgeschaltet werden.

9. Verfahren nach einem der vorhergehenden Ansprüche, **dadurch gekennzeichnet, daß** in einer Phase die Druckabbauventile in vorbestimmter Weise geöffnet werden und das Druckniveau in den Radbremsen auf einen vorbestimmten Wert abgesenkt wird.

10. Verfahren nach Anspruch 9, **dadurch gekennzeichnet, daß**, wenn das zu erwartende Druckniveau nicht an allen Radbremsen erreicht ist, ein vollständiger hydraulischer Back-up, ein Back-up nur an der Vorderachse oder ein Abschalten der Hinterachsbremsen erfolgt.

11. Verfahren nach einem der vorhergehenden Ansprüche, **dadurch gekennzeichnet, daß** in einer Testphase an wenigstens einer Radbremse einer Achse durch Öffnen des Auslaßventils der Bremsdruck auf 0 abgebaut wird.

12. Verfahren nach Anspruch 11, **dadurch gekennzeichnet, daß**, wenn an nur einer Radbremse der Druckabbau nicht bis auf 0 erfolgt, ein 3-Rad-EHB-Betrieb als Notbremsbetrieb eingeleitet wird.

13. Verfahren nach Anspruch 4, **dadurch gekennzeichnet, daß** bei nicht erfolgtem Druckausgleich der Fahrer gewarnt wird.

14. Verfahren nach einem der vorhergehenden Ansprüche, **dadurch gekennzeichnet, daß** in einer Testphase die Trennventile (MV_TVR, MV_TVL) der Bremsanlage geöffnet werden.

15. Verfahren nach Anspruch 14, **dadurch gekennzeichnet, daß** bei nicht erfolgtem vollständigen Druckabbau ein 3-Rad-EHB-Betrieb eingeleitet wird, bzw. der Betrieb des Kraftfahrzeugs eingeschränkt wird, wenn an mehr als einer Vorderradbremse kein vollständiger Druckabbau stattfand.

16. Vorrichtung zur Überprüfung einer Bremsanlage, bei welcher jeder Radbremse (16, 18, 20, 22) elektrisch betätigbare Ventilanordnungen (MV_UVR, MV_UVL, MV_UHR, MV_UHL, MV_DVR, MV_DVL, MV_DHR, MV_DHL) zugeordnet sind, mit einer Steuereinheit (100), welche abhängig von einer Bremswunschvorgabe durch Ansteuern der Ventilanordnungen Druck auf-, abbaut oder konstant hält, die Steuereinheit die Bremswunschvorgabe elektrisch erfaßt und in Ansteuersignale für die Ventilanordnungen umsetzt, wobei die Steuereinheit Mittel (102) umfaßt, die vor Fahrtbeginn einen Selbsttest der Bremsanlage durchrühren, in deren Verlauf die Funktionsweise der Ventilanordnungen sowie einer in der Bremsanlage vorhandenen Druckversorgung (42) überprüft wird, die Mittel (102) umfaßt, die bei einem erkannten Fehler ein Notbremsbetrieb einleiten, **dadurch gekennzeichnet, daß** die Steuereinheit Mittel (102) umfaßt, die im Rahmen des Selbsttests mehrere aufeinander folgende Testphasen durchführen, denen bestimmte Betätigungen der Ventilanordnungen und der Druckversorgung zugeordnet sind, an deren Ende jeweils zu erwartende Radbremsdruckwerte mit den erreichten Werten verglichen wird und bei Erkennen von Abweichungen an wenigstens einer Radbremse in Abhängigkeit von der erkannten Abweichung ein Notbremsbetrieb eingeleitet wird.

## Claims

1. Method for checking a brake system in which each wheel brake (16, 18, 20, 22) is assigned valve arrangements (MV_UVR, MV_UVL, MV_UHR, MV_UHL, MV_DVR, MV_DVL, MV_DHR, MV_DHL) which can be activated electrically and by means of which pressure can be built up or reduced or kept constant as a function of a braking request stipulation, the braking request stipulation being sensed electrically and converted into actuation signals for the valve arrangements, a self-test of the brake system being carried out before the start of a journey and the method of functioning of the valve arrangements and of a pressure supply (42) which is present in the brake system being checked in the course of said self-test, and an emergency braking mode being initiated if a fault is detected, **characterized in that** within the scope of the self-test a plurality of successive test phases are provided and specific activations of the valve arrangements and of the pressure supply are assigned to said test phases and respectively expected wheel brake pressure values are compared with the values obtained at the end of said test phases, and when deviations are detected at at least one wheel brake an emergency braking mode is initiated as a function of the detected deviation.

2. Method according to Claim 1, **characterized in that** the emergency braking mode is maintained at least for the next operating cycle.

3. Method according to one of the preceding claims, **characterized in that** the wheel brake pressure is built up to an accumulator pressure level in a test phase by opening the pressure inlet valves (MV_UVR, MV_UVL, MV_UHR, MV_UHL) for each wheel brake (16, 18, 20, 22).

4. Method according to Claim 3, **characterized in that** if the accumulator pressure is not reached in just one wheel brake, an emergency operating mode is initiated while electronically regulating three wheel brakes and switching off one wheel brake, whereas if the accumulator pressure level is not reached at more than one wheel brake a complete hydraulic backup is initiated.

5. Method according to one of the preceding claims, **characterized in that** a valve (MV_BVA, MV_BHA) which brings about the pressure equalization between the wheel brakes of one axle is opened in a test phase.

6. Method according to Claim 5, **characterized in that** if the anticipated pressure equalization does not take place, either a hydraulic back-up occurs completely, a back-up occurs only at the front axle or the rear-axle brakes are switched off, while in the case of a correct method of functioning the pressure sensors (30, 32, 34, 36) at the wheel brakes are adjusted.

7. Method according to one of the preceding claims, **characterized in that** in a test phase the accumulator pressure pump (42) of the pressure supply is switched on in order to check the charging function of the accumulator (44).

8. Method according to Claim 7, **characterized in that** if the anticipated pressure at both axles is not reached, a complete back-up is initiated, and if it is not reached only at the front axle, only the front axle is controlled hydraulically, and if it is not reached at the rear axle the rear-axle wheel brakes are switched off.

9. Method according to one of the preceding claims, **characterized in that** in one phase the pressure reduction valves are opened in a predetermined fashion and the pressure level in the wheel brakes is reduced to a predetermined value.

10. Method according to Claim 9, **characterized in that** if the anticipated pressure level is not reached at all the wheel brakes, a complete hydraulic back-up is carried out, a back-up is carried out only at the front axle or the rear-axle brakes are switched off.

11. Method according to one of the preceding claims, **characterized in that** in a test phase the brake pressure is reduced to 0 at at least one wheel brake of an axle by opening the outlet valve.

12. Method according to Claim 11, **characterized in that** if the pressure is not reduced as far as 0 at just one wheel brake, a 3-wheel EHB mode is initiated as an emergency braking mode.

13. Method according to Claim 4, **characterized in that** the driver is warned when pressure equalization has not occurred.

14. Method according to one of the preceding claims, **characterized in that** in a test phase the isolating valves (MV_TVR, MV_TVL) of the brake system are opened.

15. Method according to Claim 14, **characterized in that** when complete pressure reduction has not taken place, a 3-wheel EHB mode is initiated or the operation of the motor vehicle is restricted if no complete pressure reduction took place at more than one front wheel brake.

16. Device for checking a brake system in which each wheel brake (16, 18, 20, 22) is assigned valve arrangements (MV_UVR, MV_UVL, MV_UHR, MV_UHL, MV_DVR, MV_DVL, MV_DHR, MV_DHL) which can be activated electrically, having a control unit (100) which builds up or reduces pressure or keeps it constant as a function of a braking request stipulation by actuating the valve arrangement, the control unit senses the braking request stipulation electrically and converts it into actuation signals for the valve arrangements, the control unit comprising means (102) which carry out a self-test of the brake system before the start of a journey, the method of functioning of the valve arrangements and of a pressure supply (42) which is present in the brake system being checked in the course of said self-test, and said pressure supply (42) comprising means (102) which initiate an emergency braking mode when a fault is detected, **characterized in that** the control unit comprises means (102) which carry out a plurality of successive test phases within the scope of the self-test, specific activations of the valve arrangements and of the pressure supply being assigned to said test phase and respectively anticipated wheel brake pressure values being compared with the values obtained at the end of said test phases, and when deviations are detected at at least one wheel brake an emergency braking mode is initiated as a function of the detected deviation.

## Revendications

1. Procédé de vérification d'un système de freinage selon lequel des dispositions de soupapes à commande électrique (MV_UVR, MV_UVL, MV_UHR, MV_UHL, MV_DVR, MV_DVL, MV_DHR, MV_DHL) sont associées à chaque frein de roue (16, 18, 20, 22), permettant de faire monter ou descendre la pression ou de la maintenir constante en fonction d'une consigne de freinage souhaitée, celle-ci étant détectée électriquement et convertie en signaux de commande pour les dispositions de soupapes, un test automatique du système de freinage étant effectué avant le début du déplacement, au cours duquel est vérifié le mode de fonctionnement des dispositions de soupapes ainsi que l'alimentation en pression (42) du système de freinage, un freinage d'urgence étant initié lorsqu'une erreur est détectée,
**caractérisé en ce que**
dans le cadre du test automatique plusieurs phases consécutives sont prévues auxquelles on associe certains actionnements des dispositions de soupapes et de l'alimentation en pression, à l'issue desquelles les valeurs de pression de freinage attendues sur les roues sont comparées aux valeurs atteintes et un freinage d'urgence est initié lorsque des écarts sont détectés sur au moins un frein de roue en fonction de l'écart détecté.

2. Procédé selon la revendication 1,
**caractérisé en ce que**
le freinage d'urgence est maintenu au moins pour le cycle de fonctionnement suivant.

3. Procédé selon l'une quelconque des revendications précédentes,
**caractérisé en ce que**
dans une phase de test, la pression de freinage sur les roues est élevée au niveau de la pression de l'accumulateur par l'ouverture des soupapes d'admission de la pression (MV_UVR, MV_UVL, MV_UHR, MV_UHL) de chaque frein de roue (16, 18, 20, 22).

4. Procédé selon la revendication 3,
**caractérisé en ce que**
si la pression de l'accumulateur n'est pas atteinte dans un seul des freins de roue, un freinage d'urgence est initié avec régulation électronique des trois autres freins de roue et déconnexion du quatrième frein de roue, alors que si le niveau de pression de l'accumulateur n'est pas atteint dans plusieurs freins de roue, c'est un back-up hydraulique complet qui est initié.

5. Procédé selon l'une quelconque des revendications précédentes,
**caractérisé en ce que**
dans une phase de test, une soupape (MV_BVA, MV_BHA) établissant une compensation de pression entre les freins de roue d'un essieu est ouverte.

6. Procédé selon la revendication 5,
**caractérisé en ce que**
si la compensation de pression attendue n'a pas lieu, il se produit soit un back-up hydraulique complet, un back-up uniquement sur l'essieu avant, soit une déconnexion des freins de l'essieu arrière, alors qu'en cas de fonctionnement correct, les capteurs de pression (30, 32, 34, 36) sont alignés sur les freins de roue.

7. Procédé selon l'une quelconque des revendications précédentes,
**caractérisé en ce que**
dans une phase de test, la pompe à accumulateur de pression (42) de l'alimentation en pression est activée pour vérifier la fonction de charge de l'accumulateur (44).

8. Procédé selon la revendication 7,
**caractérisé en ce que**
si la pression attendue sur les deux essieux n'est pas atteinte, un back-up complet est initié, si elle n'est atteinte que sur l'essieu avant, seul celui-ci est commandé par voie hydraulique, si elle n'est pas atteinte que sur l'essieu arrière, les freins de roue de l'essieu arrière sont déconnectés.

9. Procédé selon l'une quelconque des revendications précédentes,
**caractérisé en ce que**
dans une phase, les soupapes de réduction de là pression s'ouvrent de façon prédéfinie et le niveau de pression dans les freins de roue est abaissé à une valeur prédéfinie.

10. Procédé selon la revendication 9,
**caractérisé en ce que**
si le niveau de pression attendu n'est pas atteint sur tous les freins de roue, il se produit un back-up hydraulique complet, un back-up uniquement sur l'essieu avant ou une déconnexion des freins de l'essieu arrière.

11. Procédé selon l'une quelconque des revendications précédentes,
**caractérisé en ce que**
dans une phase de test, la pression de freinage est réduite à 0 sur au moins un frein de roue d'un essieu par l'ouverture de la soupape d'échappement.

12. Procédé selon la revendication 11,
**caractérisé en ce que**
si la pression n'est pas réduite à 0 sur un seul frein de roue, un fonctionnement du frein électrohydraulique sur 3 roues est initié en tant que freinage d'urgence.

13. Procédé selon la revendication 4,
**caractérisé en ce que**
le conducteur est averti en l'absence de compensation de la pression.

14. Procédé selon l'une quelconque des revendications précédentes,
**caractérisé en ce que**
les soupapes d'isolement (MV_TVR, MV_TVL) du système de freinage sont ouvertes dans une phase de test.

15. Procédé selon la revendication 14,
**caractérisé en ce qu'**
en l'absence d'une réduction complète de la pression, un fonctionnement du frein électrohydraulique sur 3 roues est initié respectivement, le fonctionnement du véhicule à moteur étant limité lorsqu'il n'y a pas de réduction complète de la pression sur plus d'un frein de roue avant.

16. Dispositif de vérification d'un système de freinage, dans lequel des dispositions de soupapes à commande électrique (MV_UVR, MV_UVL, MV_UHR, MV_UHL, MV_DVR. MV_DVL, MV_DHR, MV_DHL) sont associées à chaque frein de roue (16, 18, 20, 22), avec une unité de commande (100) qui fait monter, ou descendre la pression ou la maintient constante par l'amorçage de dispositions de soupapes en fonction d'une consigne de freinage souhaitée, l'unité de commande détecte électriquement la consigne de freinage souhaitée et la convertit en signaux de pilotage pour les dispositions de soupapes, l'unité de commande comprenant des moyens (102) qui exécutent, avant le début du déplacement, un test automatique du système de freinage, au cours duquel le mode de fonctionnement des dispositions de soupapes ainsi que d'une alimentation en pression (42) du système de freinage est vérifié, comprenant les moyens (102) qui initient un freinage d'urgence lorsqu'une erreur est détectée,
**caractérisé en ce que**
l'unité de commande comporte des moyens (102) qui exécutent, dans le cadre du test automatique, plusieurs phases de test consécutives auxquelles sont associés certains actionnements des dispositions de soupapes et de l'alimentation en pression, à l'issue desquels les valeurs de pression de freinage attendues sur les roues sont comparées aux valeurs atteintes et un freinage d'urgence est initié lorsque des écarts sont détectés sur au moins un frein de roue en fonction de l'écart détecté.
